# EUROPEAN PATENT APPLICATION

(11) **EP 4 794 328 A1**
(43) Date of publication of application: **19.08.2026**
(21) Application number: 24882691.9
(22) Date of filing: 04.10.2024
(51) Int. Cl.: H04N 13/327, H04N 13/305, H04N 13/31, H04N 23/957, H04N 17/00, G03B 17/56

(54) **CALIBRATION FOR LIGHT FIELD DISPLAY USING CAMERA SCANNING**

(30) Priority: 27.10.2023 KR 20230145483
(71) Applicant: Epitone, Inc., Carlsbad, CA 92010 (US)
(72) Inventor: PARK, Hee Won, Incheon 22008 (KR); KWON, Se Yong, Incheon 21982 (KR); YANUSIK, Igor, Yongin-si Gyeonggi-do 17064 (KR)
(74) Representative: RGTH
(86) International application number: PCT/KR2024/015091
(87) International publication number: WO 2025/089663

(57) **Abstract**

An aspect of the present invention relates to a method and an apparatus for calibrating a light field display by using camera scanning and, more specifically, to a method for calibrating a light field display by applying a camera scanning method to determine parameters caused by manufacturing errors of the light field display, and to an apparatus performed by the method. According to an embodiment of the present invention, a calibration method for determining actual parameters of a 3D display system having manufacturing errors and a calibration apparatus implementing the calibration method can be provided. By determining the exact values of the actual parameters of the 3D display system having manufacturing errors, a light field image corresponding precisely to the actual parameters of the 3D display system can be generated, thereby enabling correct separation and projection of the light field image to both eyes. Accordingly, the clarity of a glasses-free 3D display system can be improved.

## Description

### TECHNICAL FIELD

An aspect of the disclosure relates to a method and device for calibrating a light field display using camera scanning and, more particularly, to a method of calibrating a light field display by applying a camera scanning technique to identify parameters attributable to fabrication errors of the light field display, and a device which is carried by the same method.

### BACKGROUND ART

The information disclosed in this section is only provided for an understanding of background information of embodiments of the disclosure and should not be taken as a description of the prior art.

According to three-dimension (3D) principles, the way that people perceive objects as 3D objects is due to binocular disparity. Binocular disparity refers to the fact that images seen by the left and right eyes are slightly different. In humans, the distance between the eyes is approximately 6.5 cm. Because of this difference, the respective eyes view a single object from slightly different angles. The brain combines this information to perceive a sense of depth of the object.

3D video is based on the same principle. An artificial difference between viewpoints is created by displaying two two-dimensional (2D) videos, which are captured from different angles, on a single screen. Giving examples of devices which are commonly available, products, such as the Optimus 3D and Nintendo 3DS, are each provided with two cameras. These two cameras capture videos at different viewpoints, which are then displayed on a single screen. When the videos captured in this manner are separated using a "special device" and shown to the human eyes, respectively, the human brain perceives a sense of depth and distance. This allows for the creation of a 3D image on the "screen," which is a 2D space.

These specialized devices are broadly categorized into "glasses-based" devices, which require special glasses, and "glasses-free" devices, each of which is attached to the display.

Optical technologies used to implement glasses-free 3D display systems include a lenticular lens method (or a lenticular display method), a parallax barrier method, and the like. The basic principles of the two methods are the same. The screen splits the left and right images and displays the split images alternately, one row at a time, so that the respective eyes view different rows (i.e., split screens). Here, different devices are used to ensure that the respective eyes view different rows. The lenticular lens method uses a lens, while the parallax barrier method uses a barrier.

The lenticular lens method involves attaching a sheet composed of hemispherical lenses to a display to deliver different images to each eye, while the parallax barrier method involves attaching a perforated barrier to the display to show different images to each eye.

While glasses-free 3D display systems offer the advantage of being usable without glasses, the fabrication processes are complex and difficult, and involve processes, such as forming an optical layer and precisely attaching the optical layer to a panel.

In a glasses-free 3D display system, it is important to project images to the respective eyes separately. In order to properly project images to both eyes, a light field image which matches the dimensions of the actual 3D display system must be generated.

However, due to various causes during the actual product fabrication process, the actual parameters of the 3D display system, e.g., the actual parameters of a panel or a lenticular lens (i.e., a barrier), differ from the design parameters. Therefore, it is urgent to develop a calibration method and a calibration device to determine the actual parameters of the 3D display system in order to generate an accurate light field image.

The prior art document includes Korean Patent No. 10-1857466 (Head-Mounted Display and Calibration Method thereof, published May 15, 2018).

The information disclosed in the Background section is technical information that the inventors possessed for, or acquired during, derivation of embodiments of the disclosure and should not be taken as known technology disclosed to the public before the filing of the embodiments of the disclosure.

### DISCLOSURE

### Technical Problem

Accordingly, the disclosure has been made in consideration of the above-described problems occurring in the related art, and the disclosure is intended to provide a calibration method for determining actual parameters of a 3D display system having fabrication errors in a novel manner, and a calibration device for implementing the method.

The objectives of the disclosure are not limited to the foregoing description, and other objectives not explicitly disclosed herein will be clearly understood by a person having ordinary skill/knowledge in the art from the description provided hereinafter.

### Technical Solution

To realize at least one of the aforementioned objectives, provided is a calibration method including: generating a test pattern; displaying the generated test pattern on a light field display; generating a captured image by capturing the displayed test pattern; analyzing the captured image; and updating the test pattern based on a result of the analysis of the captured image.

In some embodiments, the test pattern may have an analyzable gradient.

In some embodiments, the test pattern may include a linear pattern.

In some embodiments, the test pattern may be generated based on a plurality of parameters.

In some embodiments, the plurality of parameters may include at least one of a pitch parameter, a slant angle parameter, an offset parameter.

In some embodiments, the light field display may include a panel which includes a plurality of pixels and an optical layer stacked on the panel to realize a 3D effect.

In some embodiments, the optical layer may include a Lenticular lens or a parallax barrier.

In some embodiments, the light field display may include a 3D image device which generates 3D images.

In some embodiments, the captured image may include a pattern image on which the test pattern is displayed.

In some embodiments, the captured image may have a larger area than the pattern image, with an entirety of the pattern image being displayed inside the captured image.

In some embodiments, the pattern image may be an image which the light field display displays.

In some embodiments, the pattern image may include a center-view image which is generated by each of subpixels assigned.

In some embodiments, the captured image may have a centerline displayed thereon.

In some embodiments, the centerline may be a vertical centerline or a horizontal centerline.

In some embodiments, the captured image may include at least one of a still image and a video image.

In some embodiments, the captured image may include an image captured, during sliding, from a pattern image on which the test pattern is displayed.

In some embodiments, wherein the sliding operation may include moving a camera, which captures the test pattern, left or right while facing the light field display from the front.

In some embodiments, in the operation of analyzing the captured image, the accuracy of the analysis of the captured image may increase with increases in the distance of the sliding.

In some embodiments, in the operation of analyzing the captured image, the analysis of the captured image may include reading changes in the test pattern while a camera is moving.

In some embodiments, the operation of reading the changes may include determining whether the test pattern properly follows the center of the camera without lagging behind or moving ahead of the center of the camera.

In some embodiments, in the operation of analyzing the captured image, the analysis of the captured image may include reading the gradient of the test pattern.

In some embodiments, the operation of reading the gradient may include comparing the gradient of the test pattern with a parameter value which is provided to generate the test pattern.

In some embodiments, in the operation of analyzing the captured image, the analysis of the captured image may include reading a position of the test pattern on a pattern image on which the test pattern is displayed.

In some embodiments, the operation of reading the position may include determining whether the test pattern is on a central portion of the pattern image.

In some embodiments, the operation of updating the test pattern may include updating parameters based on which the test pattern is generated.

In some embodiments, the test pattern may be continuously updated, in which an initial pattern of the test pattern which is updated includes design values of the light field display.

According to another aspect of the disclosure, provided is a calibration device including: a pattern generator configured to generate a test pattern; an image generator configured to, when a light field display displays a pattern image by receiving the test pattern from the pattern generator, generate a captured image by capturing the pattern image; and an image analyzer configured to analyze the captured image to allow the pattern generator to generate a new test pattern which is updated from the test pattern.

In some embodiments, the pattern generator may receive a plurality of parameters as input and generates the test pattern based on the plurality of parameters.

In some embodiments, the plurality of parameters may be updated based on the analysis results of the captured image of the image analyzer.

In some embodiments, the image generator may generate the captured image while sliding left or right in front of the light field display.

In some embodiments, the image generator may include a camera which captures the pattern image and a means of transportation which moves the camera.

In some embodiments, the means of transportation may include a rail structure on which the camera moves.

In some embodiments, the image analyzer may update fabrication parameters of the light field display to generate the new test pattern.

In some embodiments, the fabrication parameters may include at least one of a pitch parameter, a slant angle parameter, an offset parameter.

According to another aspect of the disclosure, provided is a light field display which is calibrated based on the aforementioned calibration method.

According to another aspect of the disclosure, provided is a computer program stored on a medium for executing, in combination with hardware, the aforementioned calibration method.

### Advantageous Effects

As described above, according to embodiments of the disclosure, a calibration method for determining the actual parameters of a 3D display system having fabrication errors, and a calibration device for implementing the method, may be provided.

By determining the accurate values of the actual parameters of a 3D display system having fabrication errors, a light field image which precisely corresponds to the actual parameters of the 3D display system may be generated, which allows images to be correctly separated and projected to each eye, thereby enabling a clear glasses-free 3D display system to be provided.

In addition, the disclosure has a variety of effects with excellent versatility depending on the embodiment, and such effects may be clearly understood from the following description of embodiments.

### DESCRIPTION OF DRAWINGS

The following drawings accompanying the specification illustrate embodiments of the disclosure and, together with the foregoing disclosure, serve to provide further understanding of the technical spirit of the disclosure, and thus, the disclosure should not be construed as being limited to the drawings, wherein:
FIG. 1 illustrates a calibration method according to embodiments of the disclosure;
FIG. 2 illustrates the shape of a parallax barrier attached to the front surface of a display panel in a light field display in which subpixels are arranged;
FIG. 3 illustrates an embodiment of a calibration device which performs the calibration method shown in FIG. 1;
FIG. 4 illustrates the turned-on shape of subpixels which are assigned to a center view on a panel to which a lenticular lens is attached;
FIG. 5 schematically illustrates the order in which the calibration device shown in FIG. 3 performs calibration;
FIG. 6 illustrates captured images in a case in which the pitch p, a test parameter, is correct, i.e., in which the pitch matches the actual numerical value of the light field display;
FIG. 7 illustrates captured images in a case in which the pitch p, a test parameter, is smaller than the actual numerical value of the light field display;
FIG. 8 illustrates captured images in a case in which the pitch p, a test parameter, is larger than the actual numerical value of the light field display;
FIG. 9 illustrates a captured image in a case in which the slant angle θ, a test parameter, is correct, i.e., in which the slant angle matches the actual numerical value of the light field display.
FIG. 10 illustrates a captured image in a case in which the slant angle θ, a test parameter, is smaller than the actual numerical value of the light field display
FIG. 11 illustrates a captured image in a case in which the slant angle θ, a test parameter, is larger than the actual numerical value of the light field display
FIG. 12 illustrates a captured image when the test parameter offset o is correct, i.e., when the test parameter offset matches the actual value of the light field display;
FIG. 13 illustrates a captured image when the test parameter offset o is smaller than the actual value of the light field display; and
FIG. 14 illustrates a captured image when the test parameter offset o is larger than the actual value of the light field display

### MODE FOR INVENTION

Advantages and features of the disclosure, as well as methods of realizing the same, will be more clearly understood from the following detailed description of embodiments when taken in conjunction with the accompanying drawings. However, the disclosure is not limited to specific embodiments to be described hereinafter but should be understood as including a variety of modifications, equivalents, and alternatives within the spirit and scope of the disclosure. Rather, these embodiments are provided so that the description of the disclosure will be complete and will fully convey the scope of the disclosure to a person having ordinary skill in the art in the technical field to which the disclosure pertains. In the following description of the disclosure, a detailed description of related known technology will be omitted when the description may render the subject matter of the disclosure unclear.

The terminology used herein is for the purpose of describing particular embodiments only and is not intended to be limiting. As used herein, the singular forms are intended to include the plural forms as well, unless the context clearly indicates otherwise.

Terms, such as "comprise/include" or "have," or the like, as used herein, indicate that a feature, a number, a step, an operation, a component, a part or a combination thereof described in the disclosure is present, but do not preclude the possibility of the presence or addition of one or more other features, numbers, steps, operations, components, parts or combinations thereof in advance. It will be understood that the terms "first", "second", "A", "B", etc., may be used herein to describe various elements, but these elements should not be limited by these terms. These terms are only used to distinguish one element from another element.

Hereinafter, embodiments according to the disclosure will be described in detail with reference to the accompanying drawings, in which identical or similar constituent elements/components are given the same reference numerals, and repeated descriptions thereof will be omitted.

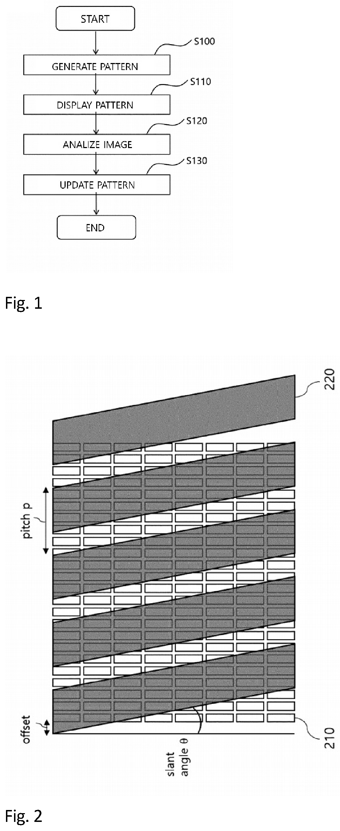

FIG. 1 illustrates a calibration method according to embodiments of the disclosure.

The calibration method according to embodiments of the disclosure may include at least one of: a pattern generating operation of generating a test pattern T; a pattern displaying operation of displaying the generated test pattern T on a light field display 200; an image generating operation of generating a captured image A by capturing the displayed test pattern T; an image analyzing operation of analyzing the captured image A; and a pattern updating operation of updating the test pattern T based on the result of analyzing the captured image A.

In the disclosure, an embodiment of the light field display 200 may be a glasses-free 3D display. The light field display 200 may have a structure in which a special layer, such as an optical layer, is attached to the top or front surface of the display panel. Here, the optical layer may include a method using a lenticular lens 220, a parallax barrier, or the like.

FIG. 2 illustrates the shape of a parallax barrier attached to the front surface of a display panel in a light field display in which subpixels are arranged.

The light field display may function as a 3D display by itself without any additional components, and may also be used as a head-up display (HUD) by reflection on a mirror, translucent glass, or the like. The light field display 200 may refer to an actual 3D display product which is mass-produced.

In the disclosure, any 3D display system, which includes a special layer attached to the display panel, may fall under this category of the light field display.

In the system including the special layer attached to the display panel, fabrication errors occur in the fabrication process, i.e., between designed specifications and actual parameter values. These errors may stem from the layers themselves during the fabrication process, or may result from the special layer not being accurately attached to the intended position on the display panel.

In this embodiment, the fabrication errors may include an actual pitch p, an actual slant angle θ, and an actual offset o. The operation of determining accurate values of these actual product parameters may be described through the calibration method according to the disclosure. Because the actual parameter values of the product must be known to use a 3D display product properly, calibration according to the disclosure is essential.

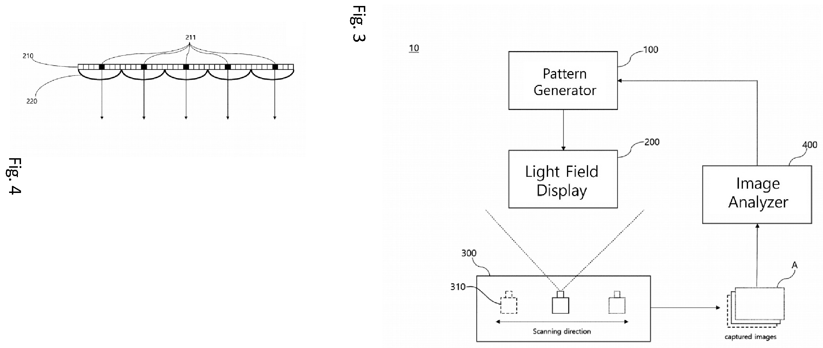

FIG. 3 illustrates an embodiment of a calibration device which performs the calibration method shown in FIG. 1.

An embodiment of the calibration device 10 for performing the calibration method according to the disclosure may include at least one of: a pattern generator 100 to generate a test pattern T; an image generator 300 to capture a pattern image B to generate a captured image A when the light field display 200 displays the pattern image B by receiving the test pattern T from the pattern generator 100; and an image analyzer 400 to analyze the captured image A to allow the pattern generator 100 to generate a new test pattern T which is updated from the test pattern T.

According to this embodiment, the image generator 300 may be positioned in front of the light field display 200. The image generator 300 may be a device which generates images optically or electronically, such as through image capturing, or may be a device which performs the functions of the camera 310. In some embodiments, the image generator 300 may include the camera 310. In some embodiments, the camera 310 may move left and right. For example, the camera 310 may be mounted on a rail so that the camera 310 is movable left and right. By adopting a structure that allows the camera 310 to move left and right, the camera 310 may scan the light field display 200 while sliding left and right.

The pattern generator 100 according to this embodiment may continuously generate the test pattern T and transmit the test pattern T to the light field display 200, and the image generator 300 may capture the area displayed by the light field display 200.

For example, in some embodiments, the pattern generator 100 may generate the test pattern T by receiving the pitch p, the slant angle a, and the offset o as inputs. When the test pattern T generated by the pattern generator 100 is transmitted to the light field display 200, the light field display 200 may display the test pattern T on the screen. When the light field display 200 displays the test pattern T on the screen, the camera 310 of the image generator 300 may capture the screen displayed by the light field display 200 to generate the captured image A.

In some embodiments, the pattern generator 100 may be a device which generates information regarding assignment values assigned to subpixels 210 of the display to generate the test pattern T. The pattern generator 100 does not necessarily refer to a standalone device, and may also take the form of a semiconductor chip mounted on a display product.

FIG. 4 illustrates the turned-on shape of subpixels 211 which are assigned to a center view on a panel to which a lenticular lens is attached.

In this embodiment, displaying a test pattern T on the screen of the light field display 200 may involve, for example, in a structure in which the lenticular lens 220 is attached to the panel, assigning values to the subpixels 211 which emit light to pass through the center of the lenticular lens 220 and turning the subpixels 211 on to display the test pattern T. The image having the test pattern T is referred to as a center-view image in this specification. The center-view image may appear white only in a specific area when the screen of the light field display 200 is viewed perpendicularly from the front.

The subpixels 211 which are turned on in the display may vary depending on how the designer sets the pitch, the slant angle, and the offset. This process by which the designer determines how the lenticular lens 220 is actually attached to the display panel by arbitrarily changing the pitch, the slant angle, and the offset and observing the results may be the calibration process according to the disclosure.

In this embodiment, the display field displayed by the light field display 200 is defined as the pattern image B, and the camera field captured by the camera 310 is defined as the captured image A.

The image analyzer 400 may analyze the captured image A generated by the image generator 300 to determine whether actual parameter values of the light field display 200 product match test parameter values input for calibration.

When the actual parameter values and the test parameter values do not match, the image analyzer 400 may continue to update the test parameter values until the test parameter values match the actual parameter values. The test parameter values may be continuously updated and input into the pattern generator 100, which may receive the updated test parameter values and continue to generate new test patterns T.

For example, until a correct pattern is visible when captured by the camera 310 of the image generator 300, the process may be repeated by: continuously modifying the test parameters to generate a new test pattern T based on the test parameters and display a pattern image B until the correct pattern is visible; capturing the displayed pattern image B to generate captured image A; and analyzing this captured image A to update the test parameter values again.

According to this embodiment, for the parameter values initially input into the pattern generator 100 to display the test pattern T on the light field display 200, the initial design values may be input because the actual parameter values of the product are unknown. That is, the process is performed by inputting the pitch, the slant angle, and the offset as design values, continuously generating the test pattern T while varying only the pitch, and capturing and reading the generated test pattern T using the camera 310. When the pitch is determined, the reading is performed by varying only the slant angle. When the slant angle is determined, the reading is performed by varying only the offset. In this embodiment, the reading was performed in the order of pitch, the slant angle, and the offset, but the order may be changed as desired.

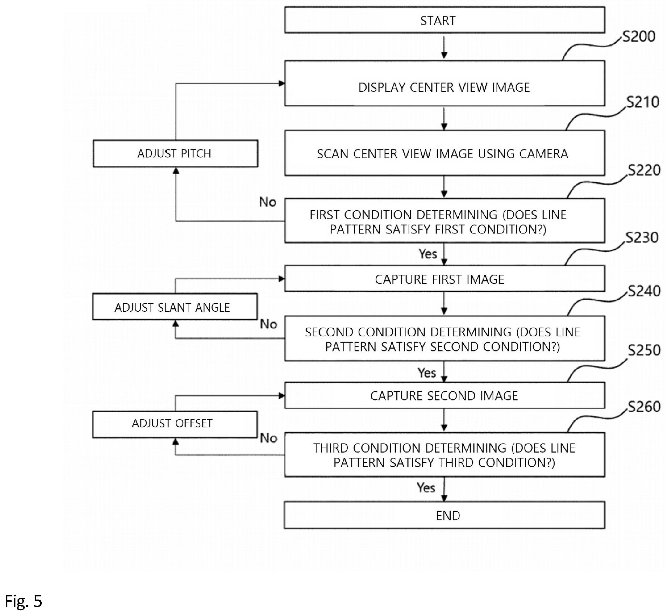

FIG. 5 schematically illustrates the order in which the calibration device shown in FIG. 3 performs calibration.

The calibration method of the calibration device 10 according to embodiments of the disclosure is described in detail. The calibration method according to this embodiment may include: a display operation S200 of receiving test parameter values, generating a center-view image, and displaying the center-view image; and a scanning operation S210 of scanning the displayed center-view image using the camera 310. In the initial display operation, the design values of the actual light field display 200 product may be input as initial values. Here, the initial values may include a pitch, a slant angle, and an offset.

In the display operation, the designer may determine and input the design values for the pitch, the slant angle, and the offset as initial test parameter inputs. When the test pitch input as the initial value immediately satisfies a first condition, the test pitch may be considered an actual pitch.

Furthermore, when the test slant angle input as the initial value immediately satisfies a second condition, the test slant angle may be considered the actual slant angle. When the test offset input as the initial value immediately satisfies a third condition, the test offset may be considered an actual offset.

After the scanning operation S210, a first condition determining operation S220 may be performed. The first condition determining operation S220 may determine whether a line pattern, which is the test pattern T, satisfies the first condition from the result of scanning the center view image using the camera 310. Here, the first condition will be described later. When the scanned result does not satisfy the first condition in the first condition reading operation, the center view image may be generated and displayed again by repeatedly adjusting the pitch until the first condition is satisfied. When the center view image generated by the new pitch satisfies the first condition as the result of scanning the new pitch using the camera 310, the new pitch is considered the actual pitch, the pitch adjustment is completed. Thereafter, the next operation, i.e., a first image capturing operation, is performed.

Here, the center view image may be a target image for reading the first condition to determine the actual pitch, which includes an image having a line pattern which is continuously generated by repeatedly adjusting only the test pitch while the slant angle and the offset are fixed.

In the first image capturing operation, an operation of capturing the first image at the center position may be performed. Here, the center position may refer to the center position of the light field display 200. That is, the first image may be captured by positioning the camera 310 at the center in front of the light field display 200 and capturing the screen field of the light field display 200. Furthermore, capturing the first image may mean obtaining an image by capturing the image by the camera 310. Here, the first image may be a target image for reading the second condition to determine the actual slant angle, which includes an image having a line pattern which is continuously generated by repeatedly adjusting only the test slant angle while the pitch and the offset are fixed.

After the first image capturing operation, a second condition determining operation may be performed. The second condition determining operation may determine whether the line pattern of the image captured in the first image capturing operation satisfies the second condition. Here, the second condition will be described later. When the line pattern of the captured image does not satisfy the second condition, the first image may be generated, captured, and analyzed again by repeatedly adjusting the slant angle until the second condition is satisfied.

When the line pattern of the first image generated based on the new slant angle in the second condition satisfies the second condition, the new slant angle may be considered the actual slant angle, and the adjustment of the slant angle may be completed.

After the adjustment of the slant angle is completed, the next operation, i.e., a second image capturing operation, may be performed.

In the second image capturing operation, the operation of capturing a second image from the center position may be performed. Here, the center position may refer to the center position of the light field display 200, as in the first image capturing operation. That is, the second image may be captured by positioning the camera 310 at the center in front of the light field display 200 and capturing the screen field of the light field display 200. Here, the second image may be a target image for reading the third condition to determine the actual offset, which includes an image having a line pattern which is continuously generated by repeatedly adjusting only the test offset in a state in which the pitch and the slant angle are fixed.

After the second image capturing operation, a third condition determining operation may be performed. The third condition determining operation may determine whether the line pattern of the image captured in the second image capturing operation satisfies the third condition. The third condition will be described later. When the line pattern of the captured image does not satisfy the third condition, the second image may be generated, captured, and read again by repeatedly adjusting the offset until the third condition is satisfied.

When the line pattern of the second image generated based on the new offset in the third condition satisfies the third condition, the new offset may be considered the actual offset, and the adjustment of the offset may be completed. At the same time, because all of the actual pitch, the actual slant angle, and the actual offset of the light field display 200 are determined, the calibration process may be completed.

The aforementioned first condition will now be described below.

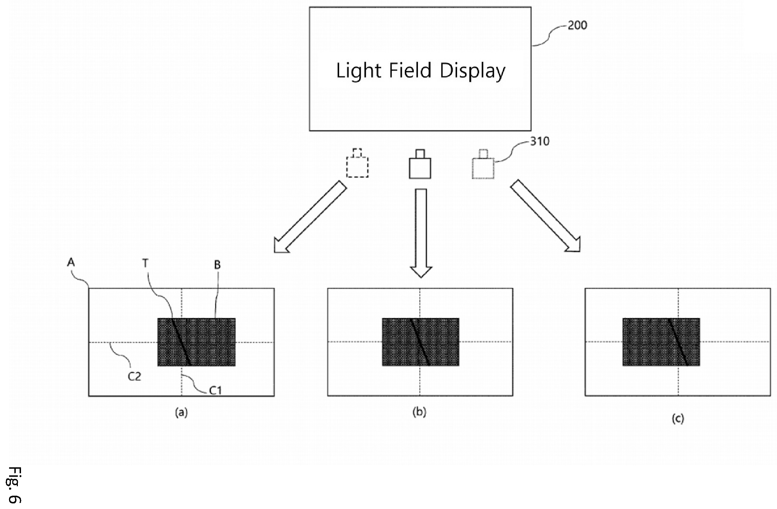

FIG. 6 illustrates captured images A in a case in which the pitch p, a test parameter, is correct, i.e., in which the pitch p matches the actual numerical value of the light field display 200. Part (a) of FIG. 6 illustrates an image A captured from the left side of the light field display 200 in a case in which the camera 310 moves to the left of the centerline of the light field display 200, part (b) of FIG. 6 illustrates an image A captured from the center of the light field display 200 in a case in which the camera 310 is positioned at the center of the centerline of the light field display 200, and part (c) of FIG. 6 illustrates an image A captured from the right side of the light field display 200 in a case in which the camera 310 moves to the right of the centerline of the light field display 200.

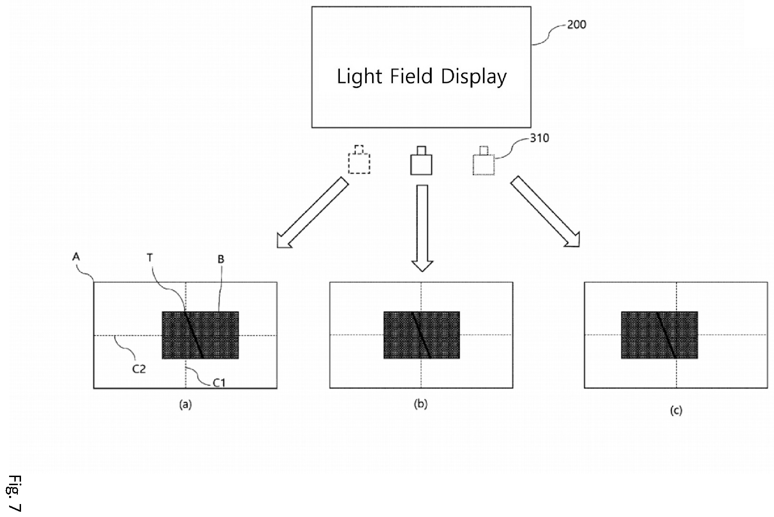

FIG. 7 illustrates captured images A in a case in which the pitch p, a test parameter, is smaller than the actual numerical value of the light field display 200. Part (a) of FIG. 7 illustrates an image A captured from the left side of the light field display 200 in a case in which the camera 310 moves to the left of the centerline of the light field display 200, part (b) of FIG. 7 illustrates an image A captured from the center of the light field display 200 in a case in which the camera 310 is positioned at the center of the centerline of the light field display 200, and part (c) of FIG. 7 illustrates an image A captured from the right side of the light field display 200 in a case in which the camera 310 moves to the right of the centerline of the light field display 200.

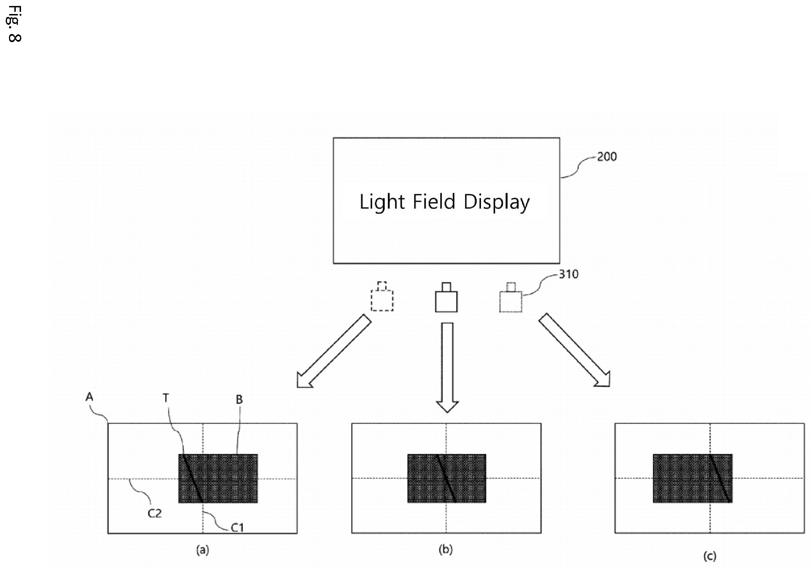

FIG. 8 illustrates captured images A in a case in which the pitch p, a test parameter, is larger than the actual numerical value of the light field display 200. Part (a) of FIG. 8 illustrates an image A captured from the left side of the light field display 200 in a case in which the camera 310 moves to the left of the centerline of the light field display 200, part (b) of FIG. 8 illustrates an image A captured from the center of the light field display 200 in a case in which the camera 310 is positioned at the center of the centerline of the light field display 200, and part (c) of FIG. 8 illustrates an image A captured from the right side of the light field display 200 in a case in which the camera 310 moves to the right of the centerline of the light field display 200.

FIG. 6 illustrates a case in which the input test pitch satisfies the first condition. Referring to FIG. 6, in a case in which the camera 310 captures an image from the left side of the light field display 200 (see part (a) of FIG. 6), in which the camera 310 captures an image from the right side of the light field display 200 (see part (c) of FIG. 6), or in which the camera 310 captures an image from the center of the light field display 200 (see part (b) of FIG. 6), the first condition is satisfied when the test pattern T passes accurately through the intersection (i.e., the center of the camera 310) where the first centerline C1 and the second centerline C2 intersect. That is, this is the case in which the center of the camera 310 and the center of the detected line pattern always match.

FIGS. 7 and 8 illustrate cases in which the input test pitch does not satisfy the first condition, in which FIG. 7 illustrates a case in which the designer input a test pitch that is smaller than the actual pitch.

Referring to part (a) of FIG. 7, when the camera 310 moves to the left, the line pattern does not follow the center of the camera 310 but lags behind to the right of the center of the camera 310. Referring to part (c) of FIG. 7, when the camera 310 moves to the right, the line pattern does not follow the center of the camera 310 and lags behind to the left of the center of the camera 310.

When the test pitch input by the designer is smaller than the actual pitch, the detected line pattern will move more slowly than the center of the camera 310. In this case, the when camera 310 is positioned at the center, the center of the line pattern matches accurately the center of the camera 310. However, when the camera 310 is moved to the right or left, the line pattern fails to keep up with the speed of the camera 310 and lags further behind. In this case, the designer determines that the test pitch input is smaller than the actual pitch as the result of analyzing the captured image A. Then, the designer increases the pitch and generates the test pattern T again. When the line pattern is detected, the adjustment operation of increasing the test pitch may be repeated until the line pattern follows the center of the camera 310 accurately.

FIG. 8 illustrates a case in which the test pitch input by the designer is larger than the actual pitch.

Referring to part (a) of FIG. 8, when the camera 310 moves to the left, the line pattern shifts further than the center of the camera 310, thereby appearing to move further to the left than the center of the camera 310. Referring to part (c) of FIG. 8, when the camera 310 moves to the right, the line pattern shifts further than the center of the camera 310, thereby appearing to move further to the right than the center of the camera 310.

When the designer inputs a test pitch that is larger than the actual pitch, the detected line pattern moves faster than the center of the camera 310. In this case, when the camera 310 is positioned at the center, the center of the line pattern is accurately at the center of the camera 310. Here, when the camera 310 is moved to right or left, the line pattern moves faster than the speed of the camera 310 and moves ahead of the camera. In this case, the designer determines that the test pitch input is larger than the actual pitch as the result of analyzing the captured image A, and reduces the pitch to generate the test pattern T again. When the line pattern is detected, the operation of reducing the test pitch may be repeated until the line pattern follows the center of the camera 310 accurately.

For example, when the input test pitch is smaller than the actual pitch, the line pattern moves slower than the center of the camera (310). When the input test pitch is larger than the actual pitch, the line pattern moves faster. Therefore, the actual pitch is determined repeatedly while checking the three cases (i.e., cases in which the test pitch is smaller than the actual pitch, in which the test pitch is larger than the actual pitch, and in which the test pitch matches the actual pitch).

Here, the scanning using the camera 310 involves observing changes in the line pattern while sliding the camera 310. Specifically, the observation of the changes involves observing whether the line pattern, which is detected during the operation of moving the camera 310 left or right, properly follows the center of the camera 310 or lags behind the center of the camera 310.

In this case, the longer the distance traveled by the camera 310, the larger the distance by which the detected line pattern deviates from the center of the camera 310. Therefore, increasing the travel distance of the camera 310 allows for more precise measurements.

The aforementioned second condition will be described below.

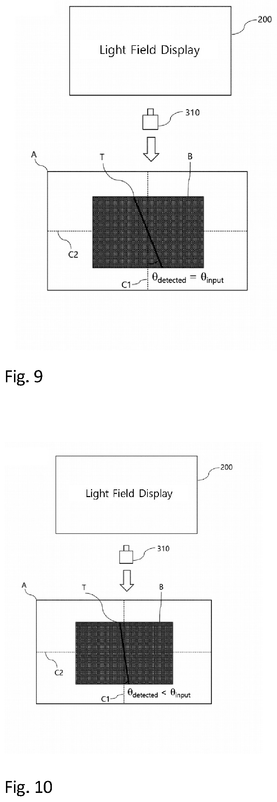

FIG. 9 illustrates a captured image A in a case in which the slant angle θ, a test parameter, is correct, i.e., in which the slant angle matches the actual numerical value of the light field display 200.

FIG. 10 illustrates a captured image A in a case in which the slant angle θ, a test parameter, is smaller than the actual numerical value of the light field display 200.

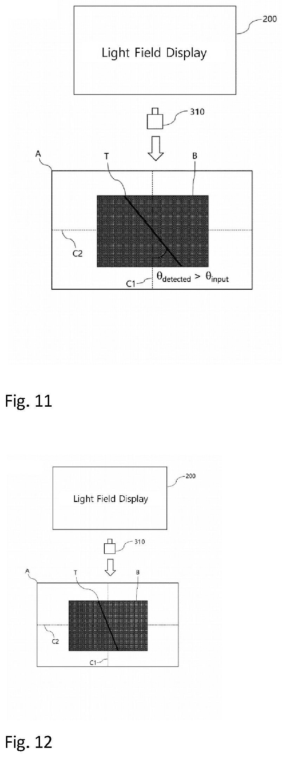

FIG. 11 illustrates a captured image A in a case in which the slant angle θ, a test parameter, is larger than the actual numerical value of the light field display 200.

FIG. 9 illustrates a case in which the input test slant angle satisfies the second condition. Referring to FIG. 9, in the case in which the second condition is satisfied, when the camera 310 captures an image from the center in front of the light field display 200, the detected test pattern T passes through the intersection point (the center of the camera 310) where the first centerline C1 and the second centerline C2 intersect. That is, the center of the camera 310 and the center of the detected line pattern match, and the detected slant angle and the input slant angle match.

FIGS. 10 and 11 illustrate cases in which the input slant angle does not satisfy the second condition, in which FIG.10 illustrates a case in which the designer input aslant angle that is smaller than the actual slant angle.

Referring to FIG. 10, the image A captured by the camera 310 shows that the center of the camera 310 matches the center of the detected line pattern, and the detected slant angle is smaller than the input slant angle.

When the test slant angle input by the designer is smaller than the actual slant angle, the detected slant angle will be smaller than the input slant angle. In this case, the designer may determine that the test slant angle input is smaller than the actual slant angle as the result of analyzing the image A and generate the test pattern T again by increasing the test slant angle. Then, when a line pattern is detected, the operation of increasing the test slant angle may be repeated until the detected slant angle matches the slant angle input as the corresponding input value.

FIG. 11 illustrates a case in which the test slant angle input by the designer is larger than the actual slant angle.

Referring to FIG. 11, the image A captured by the camera 310 shows that the center of the camera 310 and the center of the detected line pattern match, and the detected slant angle is larger than the input slant angle.

When the test slant angle input by the designer is larger than the actual slant angle, the detected slant angle is larger than the input slant angle. In this case, the designer determines that the test slant angle input is larger than the actual slant angle as the result of analyzing the image A and reduces the test slant angle to generate the test pattern T again. Then, when the line pattern is detected, the operation of reducing the test slant angle may be repeated until the detected slant angle matches the slant angle input as the corresponding input value.

For example, the actual slant angle is determined repeatedly while checking the three cases in which the detected slant angle is smaller than the input slant angle when the input test slant angle is smaller than the actual slant angle, in which the detected slant angle is larger than the input slant angle when the input test slant angle is larger than the actual slant angle, and in which the detected slant angle matches the input slant angle when the input test slant angle matches the actual slant angle.

Regarding the second condition described above with reference to FIGS. 9 to 11, the direction of the slant angle is reversed when reflected by the mirror (in this case, unlike the line patterns shown in FIGS. 9 to FIG. 11, the detected slant angle has the same magnitude as the input slant angle, but with an opposite sign). Here, in a case in which the input test slant angle satisfies the second condition, the detected test pattern T, which is captured by the camera 310 at the center in front of the light field display 200, passes through the intersection (the center of the camera 310) where the first centerline C1 and the second centerline C2 intersect, i.e., the center of the camera 310 and the center of the detected line pattern match, and the detected slant angle has the same magnitude as the input slant angle, but with an opposite sign (not shown in the figures).

In this case, the conditions that satisfy the second condition, including cases where the image is reflected by a mirror, may be described as follows: The test pattern T, which is detected when the camera 310 captures an image at the center in front of the light field display 200, passes through the intersection (i.e., the center of the camera 310) where the first centerline C1 and the second centerline C2 intersect, i.e., the center of the camera 310 and the center of the detected line pattern match, and the detected slant angle has the same absolute value as the input slant angle.

Furthermore, although not shown in the figures, when the image is reflected by a mirror, in a case in which the test slant angle input by the designer is smaller than the actual slant angle, the detected slant angle will be larger than the input slant angle. In this case, the designer determines that the input test slant angle is smaller than the actual slant angle as the result of analyzing the captured image A, and generates the test pattern T again by reducing the test slant angle. Furthermore, when a line pattern is detected, the operation of reducing the test slant angle may be repeated until the detected slant angle matches the slant angle input as the corresponding value. In the case of reflection by a mirror, a case in which the test slant angle input by the designer is larger than the actual slant angle will not be described in detail because the corresponding portions have already been described.

The aforementioned third condition will be described.

FIG. 12 illustrates a captured image A when the test parameter offset o is correct, i.e., when the test parameter offset matches the actual value of the light field display 200.

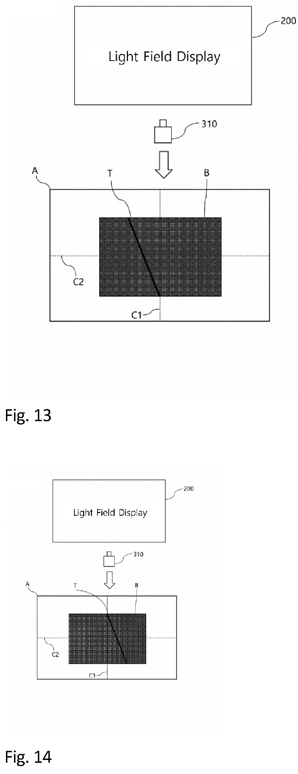

FIG. 13 illustrates a captured image A when the test parameter offset o is smaller than the actual value of the light field display 200.

FIG. 14 illustrates a captured image A when the test parameter offset o is larger than the actual value of the light field display 200.

FIG. 12 illustrates a case in which the input test offset satisfies the third condition. Referring to FIG. 12, in cases in which the third condition is satisfied, when the camera 310 captures an image at the center in front of the light field display 200, the detected test pattern T passes through the intersection (i.e., the center of the camera 310) where the first centerline C1 and the second centerline C2 of the camera 310 intersect, i.e., the center of the camera 310 and the center of the detected line pattern match.

FIGS. 13 and 14 illustrate cases in which the input test offset does not satisfy the third condition, in which FIG. 13 shows a case where the test offset input by the designer is smaller than the actual offset.

Referring to FIG. 13, the image A captured by the camera 310 shows that the center of the detected line pattern is shifted to the left relative to the center of the camera 310. That is, the center of the camera 310 and the center of the line pattern do not match.

When the test offset input by the designer is smaller than the actual offset, the center of the detected line pattern is positioned to the left of the center of the camera 310. In this case, the designer determines that the input test offset is smaller than the actual offset as the result of analyzing the captured image A, and generates the test pattern T again by increasing the test offset. Then, when the line pattern is detected, the operation of increasing the test offset may be repeated until the center of the detected line pattern matches the center of the camera 310.

FIG. 14 shows a case where the test offset input by the designer is larger than the actual offset.

Referring to FIG. 13, the image A captured by the camera 310 shows that the center of the detected line pattern is offset to the right of the center of the camera 310. That is, the center of the camera 310 and the center of the line pattern do not match.

When the test offset input by the designer is larger than the actual offset, the center of the detected line pattern is positioned to the right of the center of the camera 310. In this case, the designer determines that the input test offset is larger than the actual offset as the result of after analyzing captured image A, and generates the test pattern T again by reducing the test offset. Then, when the line pattern is detected, the operation of reducing the test offset may be repeated until the center of the detected line pattern matches the center of the camera 310.

For example, the actual offset is determined repeatedly while checking the three cases in which the center of the detected line pattern is positioned to the left of the center of the camera 310 when the input test offset is smaller than the actual offset, in which the center of the detected line pattern is positioned to the right of the center of the camera 310 when the input test offset is larger than the actual offset, and in which the center of the detected line pattern matches the center of the camera 310 when the input test offset matches the actual offset.

In some embodiments, when the three operations of determining the pitch p, the slant angle a, and the offset o are completed, a further operation may be required to return to the beginning and repeat the three operations until the three operations are successfully completed.

The embodiments of the disclosure as set forth above may be implemented in the form of computer programs executable on a computer using various components, and such computer programs may be stored in computer-readable media. Examples of the computer-readable media may include: magnetic media such as hard disks, floppy disks, and magnetic tapes; optical recording media such as CD-ROMs and DVDs; magneto-optical media such as floptical disks; and hardware devices such as ROM, RAM, and flash memory specifically configured to store program instructions and execute the program instructions.

In addition, the computer programs may be specifically designed and configured for the disclosure or may be known and available to a person having ordinary knowledge in the art of computer software. Examples of computer programs may include machine language code produced by compilers and high-level language code executable on computers using interpreters.

In the specification (in particular Claims) of the disclosure, the use of the term "the" and similar denoting terms may correspond to both singular and plural forms. Furthermore, recitation of ranges of values herein are intended merely to refer to respective separate values falling within the respective ranges and, unless otherwise indicated herein, the respective separate values are incorporated herein as if individually recited herein.

Finally, the operations of any method described herein may be performed in any suitable order unless otherwise indicated herein or otherwise clearly contradicted by the context. However, the operations shall not be limited to the described sequence. The use of any examples or illustrative languages (e.g., "such as") provided herein, is intended merely to better illustrate the disclosure and does not pose a limitation on the scope of the disclosure unless otherwise defined by the Claims. Furthermore, a person having ordinary knowledge in the art will appreciate that various modifications, combinations, and changes are possible according to design conditions and factors within the scope of the Claims or equivalents thereof.

Therefore, the spirit of the disclosure shall not be limited to the above-described embodiments, and the entire scope of the appended claims and equivalents thereof will fall within the scope and spirit of the disclosure

**<Description of Reference Numerals of Drawings>**

| | | | |
|---|---|---|---|
| 10: | calibration device | 100: | pattern generator |
| 200: | light field display | 210: | subpixel |
| 211: | subpixel assigned to center view | | |
| 220: | lenticular lens | | |
| 300: | image generator | 310: | camera |
| 400: | image analyzer | | |
| A: | captured image | B: | pattern image |
| T: | test pattern | | |
| C1: | first centerline | C2: | second centerline |

## Claims

1. A calibration method comprising:
generating a test pattern;
displaying the generated test pattern on a light field display;
generating a captured image by capturing the displayed test pattern;
analyzing the captured image; and
updating the test pattern based on a result of the analysis of the captured image.

2. The calibration method of claim 1, wherein the test pattern has an analyzable gradient.

3. The calibration method of claim 2, wherein the test pattern comprises a linear pattern.

4. The calibration method of claim 1, wherein the test pattern is generated based on a plurality of parameters.

5. The calibration method of claim 4, wherein the plurality of parameters comprises at least one of a pitch parameter, a slant angle parameter, an offset parameter.

6. The calibration method of claim 1, wherein the light field display comprises a panel which comprises a plurality of pixels and an optical layer stacked on the panel to realize a three-dimensional effect.

7. The calibration method of claim 6, wherein the optical layer comprises a Lenticular lens or a parallax barrier.

8. The calibration method of claim 1, wherein the light field display comprises a three-dimensional image device which generates three-dimensional images.

9. The calibration method of claim 1, wherein the captured image comprises a pattern image on which the test pattern is displayed.

10. The calibration method of claim 9, wherein the captured image has a larger area than the pattern image, with an entirety of the pattern image being displayed inside the captured image.

11. The calibration method of claim 9, wherein the pattern image is an image which the light field display displays.

12. The calibration method of claim 1, wherein the captured image has a centerline displayed thereon.

13. The calibration method of claim 12, wherein the centerline is a vertical centerline.

14. The calibration method of claim 1, wherein the captured image comprises at least one of a still image and a video image.

15. The calibration method of claim 1, wherein the captured image comprises an image captured, during sliding, from a pattern image on which the test pattern is displayed.

16. The calibration method of claim 15, wherein the sliding comprises moving a camera, which captures the test pattern, left or right while facing the light field display from the front.

17. The calibration method of claim 15, wherein the accuracy of the analysis of the captured image increases with increases in the distance of the sliding.

18. The calibration method of claim 1, wherein the analysis of the captured image comprises reading changes in the test pattern while a camera is moving.

19. The calibration method of claim 1, wherein the reading of the changes comprises determining whether the test pattern properly follows the center of the camera instead of lagging behind nor moving ahead the center of the camera.

20. The calibration method of claim 1, wherein the analysis of the captured image comprises reading the gradient of the test pattern.

21. The calibration method of claim 20, wherein the reading of the gradient comprises comparing the gradient of the test pattern with a parameter value which is provided to generate the test pattern.

22. The calibration method of claim 1, wherein the analysis of the captured image comprises reading a position of the test pattern on a pattern image on which the test pattern is displayed.

23. The calibration method of claim 22, wherein the reading of the position comprises determining whether the test pattern is on a central portion of the pattern image.

24. The calibration method of claim 1, wherein the updating of the test pattern comprises updating parameters based on which the test pattern is generated.

25. The calibration method of claim 1, wherein the test pattern is continuously updated, in which an initial pattern of the test pattern which is updated comprises design values of the light field display.

26. A calibration device comprising:
a pattern generator configured to generate a test pattern;
an image generator configured to, when a light field display displays a pattern image by receiving the test pattern from the pattern generator, generate a captured image by capturing the pattern image; and
an image analyzer configured to analyze the captured image to allow the pattern generator to generate a new test pattern which is updated from the test pattern.

27. The calibration device of claim 26, wherein the pattern generator receives a plurality of parameters as input and generates the test pattern based on the plurality of parameters.

28. The calibration device of claim 26, wherein the image generator generates the captured image while sliding left or right in front of the light field display.

29. The calibration device of claim 26, wherein the image generator comprises a camera which captures the pattern image and a means of transportation which moves the camera.

30. The calibration device of claim 29, wherein the means of transportation comprises a rail structure on which the camera moves.

31. The calibration device of claim 26, wherein the image analyzer updates fabrication parameters of the light field display to generate the new test pattern.

32. The calibration device of claim 31, wherein the fabrication parameters comprise at least one of a pitch parameter, a slant angle parameter, an offset parameter.

33. A light field display which is calibrated based on the method of one of claims 1 to 25.

34. A computer program stored on a medium which, when combined with hardware, executes the method of one of claims 1 to 25.
